# EUROPEAN PATENT APPLICATION

(11) **EP 2 237 530 A1**
(43) Date of publication of application: **06.10.2010**
(21) Application number: 09364003.5
(22) Date of filing: 02.04.2009
(51) Int. Cl.: H04L 29/08

(54) **Method and device for selection of a service and of selection of at least one service rendering device, and method and device for setting up a service rendering on at least one service rendering device**

(71) Applicant: Thomson Licensing, 92130 Issy-les-Moulineaux (FR)
(72) Inventor: Mischler, Denis, 92648 Boulogne Cedex (FR); Henry, Jean-Baptiste, 92648 Boulogne Cedex (FR)
(74) Representative: Benezeth, Philippe J.L. M.

(57) **Abstract**

The invention relates to the field of telecommunication and more particularly, to the selection of a service, of one or more device(s) (10) for rendering of a selected service and to the setting up of a service rendering of a selected service on one or more selected device(s) (10). More precisely, the invention defines a method and device (14) for selection of at least one device (10) for rendering a service, comprising steps implemented by a device (14) requesting the rendering of the service. The invention further defines a method and device (11) for setting up a service rendering on at least one device (10) for rendering a service, comprising steps implemented by a device (11) for setting up a service rendering.

## Description

### 1. Field of invention.

The invention relates to the field of telecommunication and more particularly, to the selection of a service, the selection of one or more device(s) for a rendering of a selected service and to the setting up of a service rendering of a selected service on one or more selected device(s).

### 2. Technical background.

According to prior art, a user has a device connected to a network providing the user with services, where a service can be represented by a content type service, such as audio, video, text or data, or by an access type service, such as a telephone service, data store service, an internet service, and a videoconferencing service. A device that is connected to a network and which interfaces with a user, i.e. a user device, has service rendering characteristics that are specific to the device. User devices can have multiple different service rendering characteristics, such as display resolution and video or audio decoding capacity. For example, a user device is a mobile device such as a mobile telephone that can connect to a Wi-Fi (an IEEE 802.11 standard) network, a portable PC that can connect to a wired IP (Internet Protocol) or to a wireless Wi-Fi network, or a fixed Set Top Box connected to a High-Definition Television screen, or a dedicated video conferencing equipment.

According to prior art, roaming users of services can access services wherever they want, by using hand-held or portable devices. However, these services to which these users can access are limited for reasons of technical, commercial, security or other limitations imposed by for example the user device, the providing network, the service provider or the service operator.
Thus, the prior art does not allow a satisfactory service access for roaming users.
Even if a device that is better suited for rendering a service desired by a user would be accessible to that user, the user still is not capable of using the device to render the desired service, due to security aspects such as needed authentication and authorization and/or billing aspects. Authentication is the process of identification of a user, often based on a user name and password. Authorization is the right of a user to access services based on his identity.
It would be desirable for a roaming user of services to access to a wider set of services, not being limited to services that are accessible on this device, his network, his service provider, his operator.
It would be desireable for a roaming user of services to access to a wide range of services on a wide range of devices, even on devices that are not 'his' devices.
It would be desireable if a roaming user could access services on other devices, via other networks, other operators than his own device, his 'own' network, his 'own' operator, and so on, without bothering about technical, commercial, security and other limitations to set up the service rendering.

### 3. Summary of the invention.

The present invention aims at alleviating the inconveniences of prior art.
More precisely, the current invention allows roaming users to select a service from a list of services, then find one or more device(s) that are capable of rendering the selected service and then select one or more device and setting up the service rendering of the selected service on the selected device(s).

The invention proposes a method of selection of a service and of selection of at least one first device capable of rendering a selected service, the method being implemented by a second device requesting the rendering of the selected service, the at least one first device and the second device being connected to a digital communication network, the method comprising the successive steps of sending of a first request for reception of a list of services comprising at least one service, of reception of the list of services. The method further comprises the successive steps of
a) sending of a second request for reception of a list of first devices, the second request comprising information representative of a selected service selected from the list of services, and the second request further comprising information representative of at least one determined parameter for construction of the list of first devices,
b) reception of the list of first devices, the list of first devices being constructed by taking into account the information representative of the at least one determined parameter for construction and by taking into account the information representative of the selected service, and the list of first devices (10) further comprising information representative of at least one service rendering characteristic for at least one first device in the list of first device, and
c) selection of at least one first device from the list of first devices by sending of a third request for rendering the selected service on the selected at least one first device, the third request comprising information representative of the selected at least one first device.

According to a variant of the method of selection, the at least one determined parameter for construction of the list of first devices is represented by at least one element of a set of elements comprising a value of a desired geographical proximity parameter between the second device and the at least one first device, and a value of a desired service rendering characteristic of the at least one first device.

According to a variant of the method of selection, the at least one service rendering characteristic is represented by at least one element of a set of elements comprising
an information representative of a geographical proximity indicating a geographical distance between the second device and the at least one first device,
a description of a location of the at least one first device,
a device type of the at least one first device,
a service rendering cost for rendering the selected service on the at least one first device,
a service rendering quality indicator for rendering the selected service on the at least one first device,
a technical specification of the at least one first device, the technical specification being represented by at least one element of a set of elements comprising a maximum attainable screen resolution of the at least one first device, a screen dimension of the at least one first device, an audio rendering quality of the at least one first device, and a list of additional equipment of the at least one first device.

According to a variant of the method of selection, the construction of the list of first devices is done by taking into account at least one element of a set of elements comprising at least a user preference, and at least a previous selection.

According to a variant of the method of selection, the selection of the at least one first device from the list of first devices is done by a user.

According to a variant of the method of selection, the selection of the at least one first device from the received list of first devices is done by taking into account at least one element of a set of elements comprising a user preference, and a previous selection.

The invention also proposes a method of setting up a service rendering on at least one first device capable of rendering a selected service, the method being implemented by a second device for setting up a service rendering, the at least one first device and the second device being connected to a digital communication network, the method comprising the successive steps of reception of a first request for sending of a list of services comprising at least one service, of sending of the list of services. The method further comprises the successive steps of
a) reception of a second request for sending of a list of first devices, the second request comprising information representative of a selected service selected from the list of services, and the second request further comprising information representative of at least one determined parameter for construction of the list of first devices,
b) sending of the list of first devices, the list of first devices being constructed by taking into account the information representative of the at least one determined parameter for construction and by taking into account the information representative of the selected service, and the list of first devices further comprising information representative of at least one service rendering characteristic for at least one first device in the list of first devices,
c) selection of at least one first device from the list of first devices by reception of a third request for rendering the selected service on the selected at least one first device, the third request comprising information representative of the selected at least one first device, and
d) setting up of a service rendering of the selected service on the selected at least one first device.

According to a variant of the method of setting up a service rendering, the at least one determined parameter for construction of the list of first devices is at least one element of a set of elements comprising a value of a desired geographical proximity between the second device and the at least one first device, and a value of a desired service rendering characteristic of the at least one first device.

According to a variant of the method of setting up a service rendering, the at least one service rendering characteristic is represented by at least one element of a set of elements comprising
an information representative of a geographical proximity indicating a geographical distance between the second device and the at least one first device,
a description of a location of the at least one first device,
a device type of the at least one first device,
a service rendering cost for rendering of the selected service on the at least one first device,
a service rendering quality indicator for rendering of the selected service on at least one first device,
a technical specification of the at least one first device, the technical specification being represented by at least one element of a set of elements comprising a maximum attainable screen resolution of the at least one first device, a screen dimension of the at least one first device, an audio rendering quality of the at least one first device, and a list of additional equipment of the at least one first device.

According to a variant of the method of setting up a service rendering, the construction of the list of first devices is done by taking into account at least one element of a set of elements comprising at least one user preference, and at least one previous selection.

According to a variant of the method of setting up a service rendering, the selection of the at least one first device is done by a user.

According to a variant of the method of setting up a service rendering, the selection of the at least one first device is done by taking into account at least one element of a set of elements comprising at least one user preference, and at least one previous selection.

The invention also proposes a selection device for selection of a service and for selection of at least one service rendering device capable of rendering a selected service, the selection device requesting the rendering of the selected service, the at least one service rendering device and the selection device being connected to a digital communication network. The selection device comprises the means of a transmitter for sending of a first request for reception of a list of services comprising at least one service, and of a receiver for reception of the list of services. The selection device further comprises the means of:
the transmitter for sending of a second request for reception of a list of service rendering devices, the second request comprising information representative of a selected service selected from the list of services, and the second request further comprising information representative of at least one determined parameter for construction of the list of service rendering devices,
the receiver for reception of the list of service rendering devices, the list of service rendering devices being constructed by taking into account the information representative of the at least one determined parameter for construction and by taking into account the information representative of the selected service, and the list of service rendering devices further comprising information representative of at least one service rendering characteristic for at least one service rendering device in the list of service rendering devices, and
the transmitter for transmission of a third request for rendering the selected service on the selected at least one service rendering device, the third request comprising information representative of the selected at least one service rendering device, the selected at least one service rendering device being selected form the list of service rendering devices.

The invention also proposes an application server device for setting up a service rendering on at least one service rendering device capable of rendering a selected service, the at least one service rendering device and the server device being connected to a digital communication network. The application server device comprises a receiver for reception of a first request for sending of a list of services comprising at least one service, and a transmitter for sending of the list of services. The application server device further comprises the means of:
the receiver for reception of a second request for sending of a list of service rendering devices, the second request comprising information representative of a selected service selected from the list of services, and the second request further comprising information representative of at least one determined parameter for construction of the list of service rendering devices,
means for construction of the list of service rendering devices, the list of service rendering devices being constructed by taking into account the information representative of the at least one determined parameter for construction and by taking into account the information representative of the selected service, and the list of service rendering devices further comprising information representative of at least one service rendering characteristic for at least one service rendering device in the list of service rendering devices,
the transmitter for sending of the list of service rendering devices,
the receiver for reception of a third request for rendering the selected service on the selected at least one service rendering device, the third request comprising information representative of the selected at least one service rendering device, and the selected at least one service rendering device being a selection from the list of service rendering devices, and
means for setting up of a service rendering of the selected service on the selected at least one service rendering device.

The invention also proposes a system comprising at least one first device capable of rendering a selected service, a second device for selection of a service and for selection of at least one first device and a third device for setting up a service rendering of the selected service on the at least one first device, the at least one first device and the second device and the third device being connected to a digital communication network. The system comprises the means of:
a transmitter for sending of a first request for reception of a list of services comprising at least one service,
a receiver for receiving of the first request,
a receiver for receiving the list of services,
the transmitter for sending of the list of services,
the transmitter for sending of a second request for reception of a list of first devices, the second request comprising information representative of a selected service selected from the list of services, and the second request further comprising information representative of at least one determined parameter for construction of the list of first devices,
the receiver for receiving of the second request,
means for construction of the list of first devices, the list of first devices being constructed by taking into account the information representative of the at least one determined parameter for construction and by taking into account the information representative of the selected service, and the list of first devices further comprising information representative of at least one service rendering characteristic for at least one first device in the list of first devices,
the transmitter for sending of the list of first devices,
the receiver for receiving the list of first devices,
the transmitter for transmission of a third request for rendering the selected service on the selected at least one first device, the third request comprising information representative of the selected at least one first device, the selected at least one first device being selected from the list of first devices,
the receiver for reception of the third request,
means for setting up of a service rendering of the selected service on the selected at least one first device.

### 4. List of figures.

More advantages of the invention will appear through the description of particular, non-restricting embodiments of the invention. The embodiments will be described with reference to the following figures:
- Figure 1 shows an example embodiment of the invention in a network infrastructure that is compatible with the invention and that includes a mobile user device connected to a network;
- Figure 2 shows yet another example embodiment of the invention in a network infrastructure that is compatible with the invention and that includes a mobile user device connected to a network;
- Figure 3 shows a sequence diagram of messages and operations of the devices illustrated in figure 1 according to a first embodiment of the invention.
- Figure 4 shows a device for requesting rendering of a service, such as User device 14 of figures 1, 2, and 3, according a particular embodiment of the invention.
- Figure 5 shows a device for setting up a service rendering, such as device 11 of figures 1, 2 and 3, according a particular embodiment of the invention.
- Figure 6 shows an algorithm of selection, implemented for example in device 14 of figures 1, 2, 3, and 4, of at least one device for rendering a service according to a particular embodiment of the invention.
- Figure 7 shows the method of setting up a service rendering on a device for rendering a service according a particular embodiment of the invention. The algorithm can be implemented for example by device 11 of figures 1, 2, 3 and 5.

### 5. Detailed description of the invention.

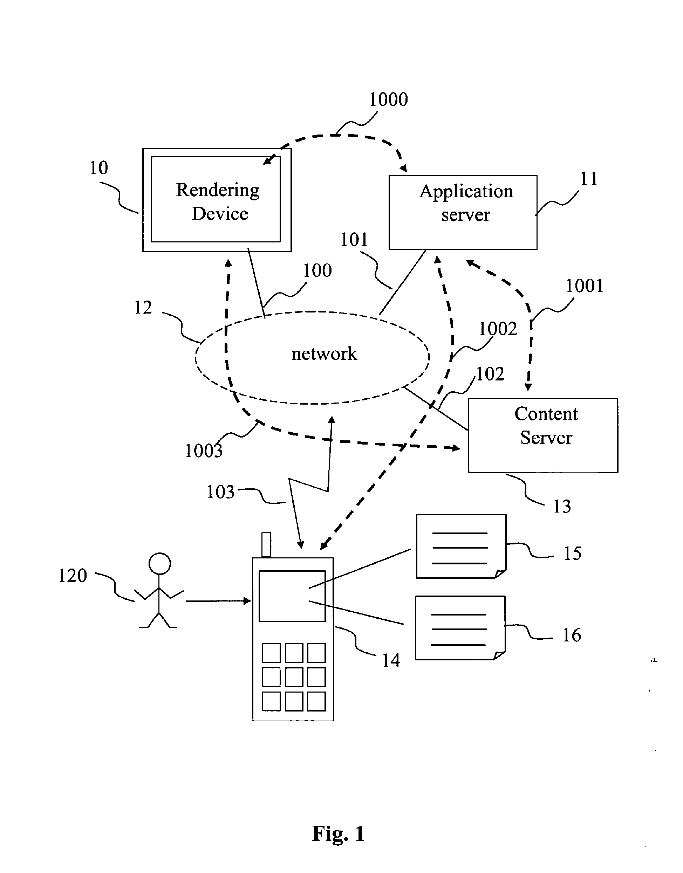

**Figure 1** shows a diagram of a first embodiment of the invention in a network infrastructure compatible with the invention.

The infrastructure comprises:
- a Rendering device 10 ;
- an Application Server 11;
- a Content Server 13;
- a User device 14;
- a network 12 to which all of these devices are connected:
   Service Rendering device 10 is connected via link 100, Application Server 11 is connected via link 101, Content Server 13 is connected via link 102 and User device 14 is connected via wireless link 103; and
- a roaming user 120.

The figure further illustrates the following virtual connections, over which data- and/or control flows:
- virtual connection 1000 from Application Server 11 to Service Rendering device 10;
- virtual connection 1001 from Application Server 11 to Content Server 13;
- virtual connection 1002 from Application Server 11 to User device 14;
- virtual connection 1003 from Content Server 13 to Service Rendering device 10.

User 120 is operating User device 14. User 120 can access services that are available to him, that is, services comprised in a subscription, freely accessible services, pay-per-view services, video conferencing services, telephone services etc, from User device 14. To access these services, user 120 accesses Application Server 11 via device 14 and network 12. Application Server 11 is a dedicated server in a service operator network 12. Content Server 13 can deliver content to any device connected directly or indirectly to the network such as Service Rendering device 10.

User 120 uses device 14 to send a request to Application Server 11 to obtain a list of services that are available to him, via connection 103 and 101, symbolized by virtual connection 1002. Upon reception of this request, Application Server 11 returns to User device 14 a list of services available to user 120, also symbolized by virtual connection 1002 and service list 15. User 120 selects a service, in this embodiment a content type service from Content Server 13, then sends a second request for a list of devices capable of rendering the selected service, the second request comprising information representative of the selected service as for example a service ID, a service address, a service name, a service number or any other parameter identifying a service. The second request further comprises information representative of at least one determined parameter that is used by Application Server 11 to construct the requested list of devices. This second request is also sent over virtual connection 1002. Application Server 11 constructs a list of devices capable of rendering the selected service by taking into account the information representative of the at least one determined parameter and by taking into account the information representative of the selected service. After construction of the list of devices, the Application Server 11 then replies to this second request by sending to User device 14 the thus constructed list of devices 16 that are capable of rendering the selected service. The thus constructed list comprises information representative of one or more service rendering characteristic(s) of one or more device(s) in the constructed list. The thus constructed list is sent to user device 14, which receives the list via virtual connection 1002. Then, a selection is done of one or more device(s) from the received list of devices capable of rendering the selected service, by means of sending of a third request for rendering the selected service on the selected device(s) to Application Server 11, the request comprising information representative of the selected device(s), for example in this embodiment device 10. Finally, Application server 11 exchanges commands and data with Service Rendering device 10 and with Content Server 13, to set up the delivery of the selected service on the selected device 10, illustrated by virtual connection 1003 from Content Server 13 to Service Rendering device 10 and vice versa.

According to a particular embodiment of the invention, the set up of the Application Server 11 comprises exchanges commands and data with Content Server 13, which in turn sets up the connection with Service Rendering device 10.

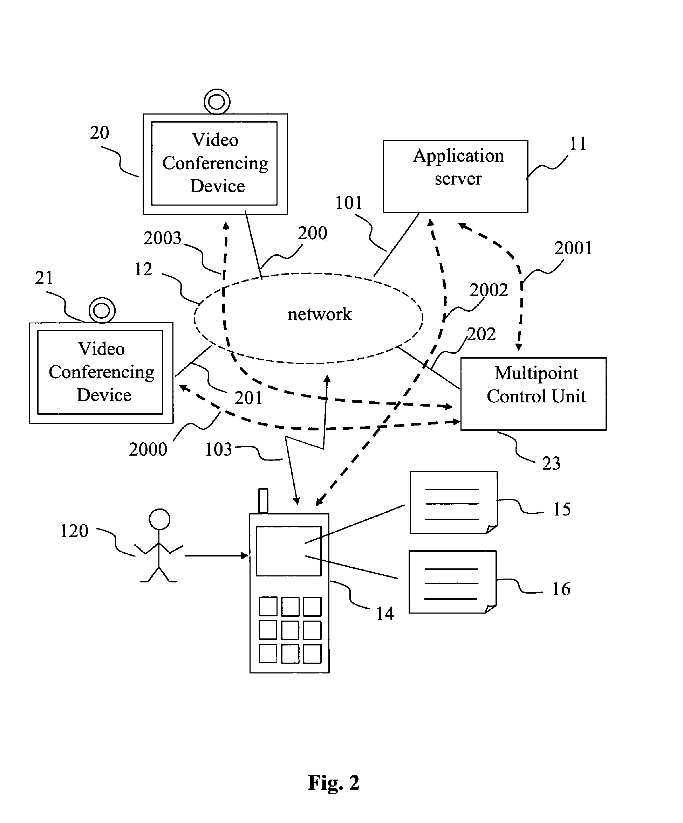

**Figure 2** shows a diagram of an alternate, second embodiment of the invention in a network infrastructure compatible with the invention.

The elements that have already been described for figure 1 and that have a similar function in figure 2, are not described again.

The infrastructure comprises other elements that are not part of figure 1:
- Video Conferencing Device 20, connected to network 12 via link 200;
- Video Conferencing Device 21, connected to network 12 via link 201; and
- Multipoint Control Unit 23, connected to network 12 via link 202.

The figure further illustrates the following virtual connections, over which data- and/or control flows:
- virtual connection 2000 from Multipoint Control Unit 23 to Video Conferencing device 21;
- virtual connection 2001 from Application Server 11 to Multipoint Control Unit 23;
- virtual connection 2002 from Application Server 11 to User device 14; and
- virtual connection 2003 from Multipoint Control Unit 23 to Video Conferencing device 20.

According to this second embodiment, user 120 uses a connection to network 12 to set up a video conferencing session between Video Conferencing devices 20 and 21.

User 120 can access services, that is, services comprised in a subscription, free accessible services, pay-per-view services, etc, from user device 14, but also a video conferencing service. To access these services, user 120 accesses Application Server 11 via device 14 and network 12. Multipoint Control Unit (MCU) 23 is a dedicated device to be used for setting up video conferencing between two or more participants. Among others, MCU 23 can be used to set up video conferencing between Video Conferencing device 20 and to Video Conferencing device 21.

User 120 uses device 14 to send a request to Application Server 11 to obtain a list of services that are available to him, via connection 103 and 101, symbolized by virtual connection 2002. Upon reception of this request, Application Server 11 returns a list of services to device 14, also symbolized by virtual connection 2002 and service list 15. Then User Device 14 sends a second request to the Application Server 11 for a list of devices capable of rendering the selected service. This second request comprises information representative a service selected from the list of services, in this embodiment an access type service available through Multipoint Control Unit 23, and the second request further comprises a determined parameter that is used by Application Server 11 to construct the requested list of devices that is capable of rendering the selected service. This second request is sent over virtual connection 2002. Upon reception of the request, Application server 11 replies by sending a constructed list of devices 16 that are capable of rendering the selected service. The thus constructed list comprises information representative of at least one service rendering characteristic of at least one device in the constructed list. The thus constructed list is sent to device 14, which receives it via virtual connection 2002. Then at least one device from the received constructed list of devices 16 for rendering of the selected service is selected, by means of sending of a third request to Application Server 11, the request comprising the selected device(s), for example in this embodiment device 20. To set up the service rendering, Application Server 11 exchanges commands and data with Multipoint Control Unit 23 via link 2001, and instructs it to set up a Video Conferencing service between device 20 and 21. Multipoint Control Unit sets up the connection between the two devices, symbolized by virtual connection 2003 from Multipoint Control Unit 23 to Video Conferencing Device 20 and by virtual connection 2000 from Multipoint Control Unit 23 to Video Conferencing Device 21. Once the connection is setup, user 120 can use Video Conferencing Device 20.
According to a particular embodiment of the invention, no MCU is used and the method sets up rendering of the selected service on device 20, and user 120 himself puts into place a video conferencing session with another video conferencing device 20.
According to a particular embodiment of the invention, the determined at least one parameter for construction of the requested list of devices is a value of a desired geographical proximity parameter between the user device 14 and devices to be present in the requested list of devices that are capable of rendering the selected service. An example of such a parameter is 'radius=10m' or 'distance = 1 min walking distance'. The feature makes use of a geo-localization device integrated in the User device 14, to obtain the geographical position of the user device 14, or any other way to determine the geographical position of the device 14 requesting the rendering of the selected service, such as identification of the cell from which a mobile device requesting the rendering of the selected service is used, or any other means, such as information provided by the user or by the device on the geographical location. This feature allows selecting devices in proximity of the User device 14 to render the selected service, which can be useful for example when his user device does not have the rendering capabilities that the user requires. For example, in the case of figure 1 the user device 14 is a mobile phone with a small screen, and the user can request discovery of a device at geographical proximity with larger screen size. As another example, the user wants to know if he can use a video conferencing service somewhere in his neighborhood, while his user device does not offer such a service.
According to a particular embodiment of the invention the determined at least one parameter for construction of the requested list of devices is a value of a desired service rendering characteristic for the devices to be present in the list of devices capable of rendering the selected service. Examples of a value of a desired service rendering characteristic is an exact value, a minimal value, a maximum value, or larger, smaller, than the rendering characteristics of the User device 14. For example, the user 120 can specify with this feature that only devices with a user-specified minimal screen size should be present in the list of devices capable of rendering the selected service.
Of course, all or only some of these particular embodiments can be combined to form a particular powerful way for a user to influence on the construction of the list of devices and thus be served with a list of devices capable of rendering a selected service that is particularly adapted to his needs. For example, the at least one determined parameter comprises a parameter for geographical proximity, and a parameter for a desired rendering characteristic such as "proximity < 10 meters' and 'screen size > 21 inch' or 'proximity = inside NY conference center and device type=laser printer'.
According to a particular embodiment of the invention, the at least one service rendering characteristic of one or more device(s) in the constructed list is one or more of the following characteristics:
- an information representative of a geographical proximity indicator indicating a geographical distance between user device 14 and the one or more Service Rendering device(s) capable of rendering a selected service. This allows selecting of devices from the constructed list of devices according to the distance that separates the user device and the Service Rendering device(s) capable of rendering a selected service;
- a description of a location of the one or more Service Rendering device(s) 10. This feature allows selection of a device for rendering a selected service according to its location. The location can be any description that gives an indication of the place where the one or more Service Rendering device(s) are, such as GPS (Global Positioning System) coordinates, a textual description like 'main building, 2^{nd} floor, 3^{rd} office to the left', a postal address, or any other type of information indicating the location of the device(s) capable of rendering a selected service;
- a device type, such as "television set", "desktop PC", "laser printer", or "multi-purpose color copier". This feature allows to select devices from the list of devices capable of rendering the selected service according to a device type that is most convenient, for example a device that is most versatile, so that it can render additional services, or a device that is faster, such as a laser printer instead of an ink jet printer or to select a device that the user already has used before and with which the user is at ease for operating it, and so on;

- a service rendering cost such as "2€/minute" or "0.20cts/call", which feature allows to select a Service Rendering device(s) that for example offers the cheapest rendering of a selected service;
- a service rendering quality indicator such as "frame rate = 15 frames/s", "SD" (for Standard Definition), "HD 1080p" (for High Definition 1080 pixels, progressive scan) or "DSL100Mb/s" (for Digital Subscriber Line, 100 Megabits per second), to name a few, which allows for example to select a device(s) that have the best service rendering characteristics, or that is best suited for rendering the selected service;
- a technical specification of the one or more Service Rendering device(s) capable of rendering a selected service, the technical specification such as:
- a maximum attainable screen resolution such as 1680x1050 pixels;
- a screen dimension such as 117cm, or 21 inch;
- an audio rendering quality such as HiFi, 30WRMS or surround sound;
- listing of additional equipment such as printer, microphone, webcam, radio, built-in photocamera, etc, or additional connectivity such as presence of FireWire, USB, Ethernet, or internet connectivity, etc.

These technical specification features allow to select a device(s) that is best suited to render the selected service or that is the most versatile.
All or only some of these service rendering characteristics can be present in the list of devices capable of rendering a selected service, for only some or for all devices in that list. It can be particularly advantageous to have at least several rendering characteristics per device in the list of devices, to make choosing easier or better oriented.
According to a particular embodiment of the invention, the selection of a device from the list of devices capable of rendering the selected service is done manually by the user 120. This feature allows a maximum flexibility for choosing a Service Rendering device(s) that corresponds best to selection criterions of the user 120.
According to a particular embodiment of the invention, the list of devices capable of rendering the selected service is constructed by taking into account one or more user preferences, such as a minimum allowable service rendering quality, maximum allowable cost or maximum allowable geographical distance between user device 14 and devices capable of rendering the selected service. This feature allows reducing the number of devices in the list of devices prior to reception of the list by the user device 14, so that the list of devices filtered on 'interesting' devices because it lists devices that correspond to the user's preferences.
According to a particular embodiment of the invention, the list of devices capable of rendering the selected service is constructed by taking into account one or more previous selections done by the same user or by other users requesting rendering of the same service. This feature allows reducing the number of devices in the list of devices prior to reception the list by the User device 14, by listing devices that are most often selected. These previous selections can be stored in a database, so that statistical calculations can be done in order to take into account previous selections.
All of these particular embodiments that influence on the construction of the list of devices capable of rendering the selected service can advantageously be combined. For example, user preferences and previous selections can be used for constructing the list of devices capable of rendering the selected service. For example, to filter devices which are most often used in the case of a specific preference.
According to a particular embodiment of the invention, the selection of a device from the list of devices capable of rendering the selected service is done by the device that receives the list of devices capable of rendering the selected service, such as User device 14, which device takes into account at least one user preference, such as the aforementioned user preferences. This mode of operation is called "automatic device selection".
According to a particular embodiment of the invention, the selection of a device from the list of devices capable of rendering the selected service is done by the device that receives the list of devices capable of rendering the selected service, such as User device 14, which device takes into account at least one previous selection done by the same or other users requesting rendering of the same service. This is again an example of "automatic device selection".

These features of automatic device selection allow reduction of the number of actions needed to select a device capable of rendering the selected service by relieving a user of the selection of a device from a list of devices capable of rendering a selected service.

All of these particular embodiments of this automatic selection of a device from the list of devices capable of rendering the selected service can advantageously be combined. For example, the User device 14 can take into account user preferences and previous selections to select the Service Rendering device from the list of devices capable of rendering the selected service that is best suited for rendering the selected service.

According to a particular embodiment of the invention, the embodiments of construction of the list of devices capable of rendering a selected service and of selection of at least one device from that list can be combined so as to reduce the number of devices in the list prior to sending and in the same time use the automatic device selection feature. This has the advantage of presenting a simplification in the use of the invention by a user and according to a particular embodiment, the list of devices capable of rendering is even not shown to the user of the device 14 and only the automatically selected device is shown, which offers another and further simplification of the use of the invention for a user.

According to a particular embodiment of the invention, after selection of the service and at least a device of the list of devices capable of rendering a selected service, the Application Server 11 sets up all that is needed for the user to be able to use the selected service; this comprises for example user authentication, user authorization for service rendering, necessary configurations of the devices that intervene in the service rendering, and so on. This feature has the advantage for the user that he does not have to worry about how to set up the service rendering and how to get access to selected service and devices. According to a particular embodiment of the invention, the devices that are listed in the list of devices capable of rendering the selected service only lists devices to which the user really can have access for rendering of the selected service taking into account as technical, commercial, security and/or other parameters.

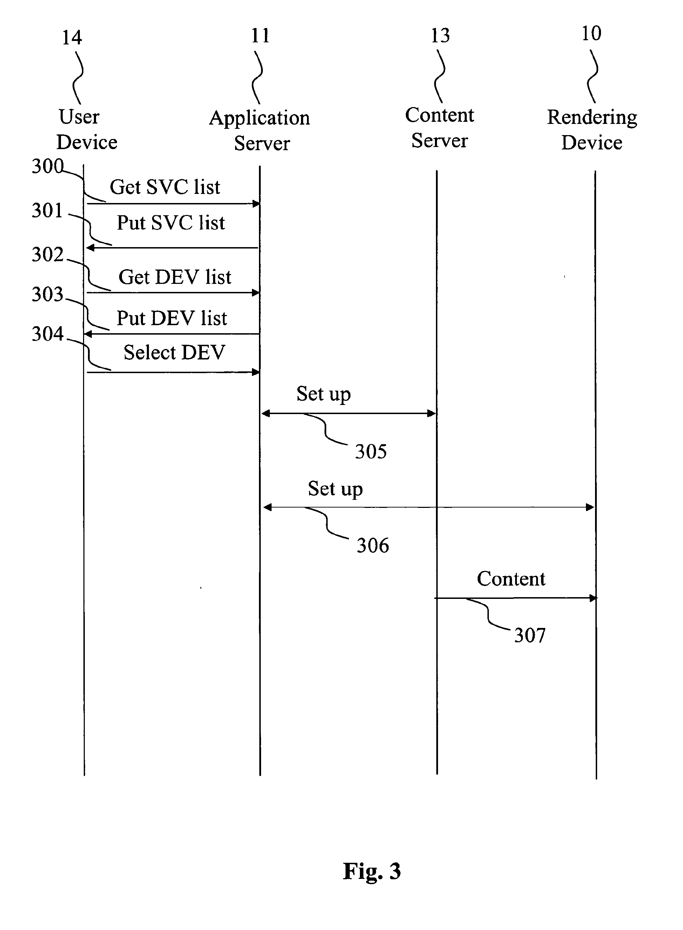

**Figure 3** shows a sequence diagram of messages and operations of the devices illustrated in figure 1 according to a first embodiment of the invention.

The diagram comprises, from left to right:
- User device 14;
- Application Server 11;
- Content Server 13; and
- Service Rendering device 10.

The sequence diagram starts with a request 300 to obtain a list of services that are available to the user 120 of device 14, sent from User device 14 to Application Server 11. Upon reception of this request, Application Server 11 returns a list of services to device 14, symbolized by arrow 301. User 120 makes a selection from this list, in this embodiment a content type service from Content Server 13, and comprises an information representative for the selected service and the at least one determined parameter that is used by Application Server 11 to construct the requested list of devices that is capable of rendering the selected service in a second request 302 for a list of devices capable of rendering the selected service. Application Server 11 constructs a list of devices capable of rendering the selected service by taking into account the information representative of the at least one determined parameter and by taking into account the information representative of the selected service. Application Server 11 replies to this second request by sending the thus constructed list of devices that are capable of rendering the selected service, illustrated by arrow 303. The thus constructed list comprises information representative of at least one service rendering characteristic of at least one device in the constructed list. Then, a selection is done of one or more devices selects at least one device from the received list of devices capable of rendering the selected service, by means of sending of a third request, illustrated by arrow 304, to Application Server 11, the request comprising information representative of the device(s), for example this embodiment Service Rendering device 10. Finally, Application Server 11 exchanges commands and data with Service Rendering device 10, illustrated by arrow 305, and with Content Server 13, illustrated by arrow 306, to set up the delivery by Content Server of the selected service on the selected device 10, which delivery is illustrated by arrow 307.

According to a particular embodiment of the invention, the Application Server 11 consults other devices for construction of the list of services and for construction of the list of devices, such as Content Server 13 of figure 1 of MCU of figure 2 or even other devices such as operator devices. This can be advantageous in complex environments where a user has many services available to him, these services originating from different devices, different operators, and so on.

According to a particular embodiment of the invention, the Application Server 11, once having received the selection of the device, sets up the service rendering of the selected service on the selected device by transmission/exchange of information with Content Server 13 or with Service Rendering device 10 only, or even with another device, other than Service Rendering device 10 or Content Server 13, capable of setting up the selected service on the selected device, instead of Application Server 11 doing the setting-up. This can be advantageous in complex environments where services set up need to be done by dedicated devices, for technical, commercial or security reasons.

According to a particular embodiment, the Application Server 11, in order to set up the service rendering of the selected service on the selected device contacts other Application Servers to set up the service rendering, which can have an advantage in networks that each have their own Application Server which only serves service rendering on devices belonging to the network managed by that particular Application Server.

According to a particular embodiment of the invention, the request 300 for a list of services is not triggered by a demand from the User device 14, but is done periodically, in order to maintain an updated list in User device 14. In such a case, a demand for a list of services from User device 14 can be satisfied within a reduced delay.

According to a particular embodiment of the invention, the Application Server 11 sends updated service lists periodically to User device 14, or sends only when the list of services changes. This allows the User device 14 to be updated at any time, without the need to send a request for a service list to the Application Server 11 regularly.

Thus, the sequence diagram shows the method of selection of at least one device (10) for rendering a service, comprising steps of:
- sending (300) of a first request for reception of a list of services;
- reception (301) of the list of services comprising at least one service;
- sending (302) of a second request for reception of a list of devices capable of rendering a service selected from the sent list of services, the second request comprising information representative of the selected service, and the second request further comprising information representative of at least one determined parameter for construction of the requested list of devices;

- reception (303) of the list of devices capable of rendering the selected service, the received list of devices being constructed by taking into account said information representative of the at least one determined parameter for construction and the information representative of the selected service, and the list of devices capable of rendering the selected service further comprising information representative of at least one service rendering characteristic for at least one device in the list of devices; and
- selection of at least one device from the list of devices capable of rendering the selected service by sending (304) of a third request for rendering the selected service on said selected at least one device, the third request comprising information representative of the selected at least one device.

The diagram also illustrates the method of setting up a service rendering on at least one Service Rendering device (10) for rendering a service, characterized in that the method comprises the following steps, implemented by a device (11) for setting up a service rendering, said device (10) for rendering a service and the device (11) for setting up a service rendering being connected to a digital communication network:
- reception (300) of a first request for sending of a list of services;
- sending (301) of the list of services comprising at least one service;
- reception (302) of a second request for sending of a list of devices capable of rendering a service selected from the sent list of services, the second request comprising information representative of the selected service, and the second request further comprising information representative of at least one determined parameter for construction of the requested list of devices;
- sending (303) of the list of devices capable of rendering the selected service, the requested list of devices being constructed by taking into account the information representative of the at least one determined parameter for construction and the information representative of the selected service and the list of devices further comprising at least one service rendering characteristic for at least one device in the list of devices capable of ;
- selection of at least one device from the list of devices capable of rendering the selected service by reception (304) of a third request for rendering the selected service on the selected at least one device, the third request comprising information representative of the selected at least one device; and
- setting up (305, 306) of a service rendering of the selected service on the selected at least one device.

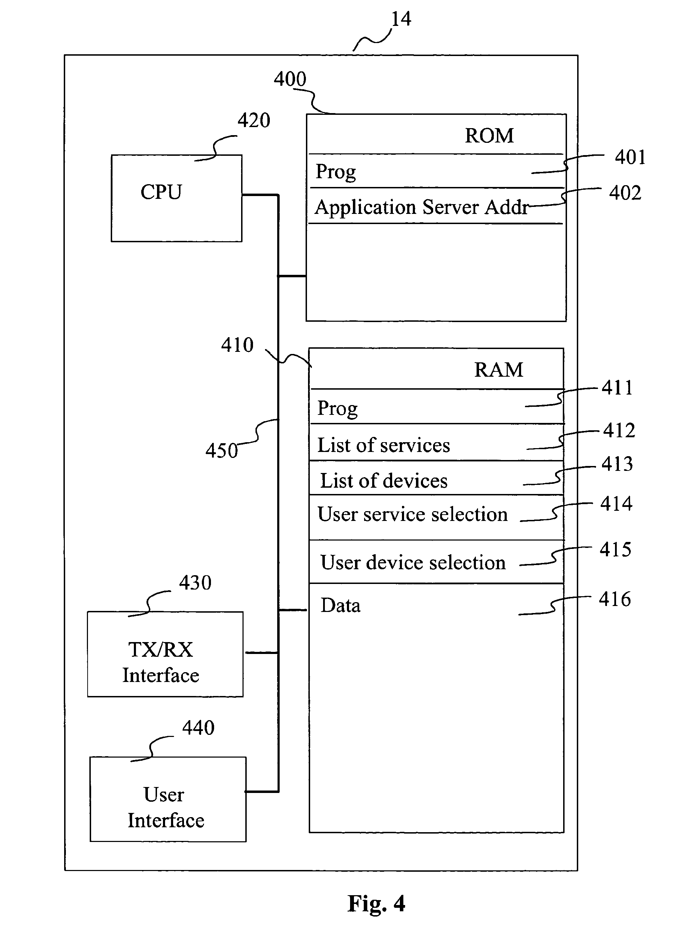

**Figure 4** shows a device implementing the method of selection, according a particular embodiment of the invention.

The device 14 comprises the following elements, interconnected by an address and data bus 450:
- a microprocessor 420 (or CPU, for « Central Processing Unit ») ;
- a non-volatile memory of type ROM (« Read Only Memory ») 400 ;
- a read-write memory or RAM (« Random Access Memory ») 410 ;
- a transmission/reception (TX/RX) interface 430; and
- a user interface 440.

At power-on, the microprocessor 420 copies a program corresponding to the instructions of the algorithm implementing the steps of the method of selection that is stored in the ROM register 401 to RAM register 411 and executes them.

The transmission/reception interface 430 allows the device 14 to receive and send messages and data over a network connection. According to a particular embodiment of device 14, the interface 430 is adapted for connection to a wireless network. According to variant embodiment of device 14, the interface 430 is adapted for connection to a wired network. According to a particular embodiment of the device 14 the transmission and reception interfaces are combined in a same interface 430. According to a variant embodiment of the device 14, the transmission and reception interfaces are separate interfaces that are both separately connected to address- and data bus 450.

The user interface 440 allows the device 14 to interact with the user 120. According to a particular embodiment of the device 14, the user interface 440 comprises a keyboard and a screen. According to another particular embodiment of the device 14, the user interface 440 comprises a touch sensitive, input capable screen.

The word « register » used in the description of memories 400 and 410 means a low-capacity memory zone (only some binary data) or a high-capacity memory zone (allowing the storage of an entire program or of a large amount of data).

Each of the registers in ROM 400 and RAM 410 can hold a variable number of data of variable size. The read-only memory 400 comprises:
- a register 401, where the program is stored ; and
- a register 402, where addresses are stored of Application servers, such as the address of Application Server 11 of figure 1.

The random-access memory 410 comprises:
- a register 411, used for storing the program copied from ROM 400 upon powering on of the device;
- a register 412, used for storing a received list of services;
- a register 413, used for storing a received list of devices capable of rendering a selected service;
- a register 414, used to store a user selection of a service selected from the received list of services;
- a register 415, used to store a user selection of a device selected from the received list of devices capable of rendering a selected service; and
- a register 416 that contains a data space needed for the functioning of the program stored in RAM register 411, for example to store temporary variables.

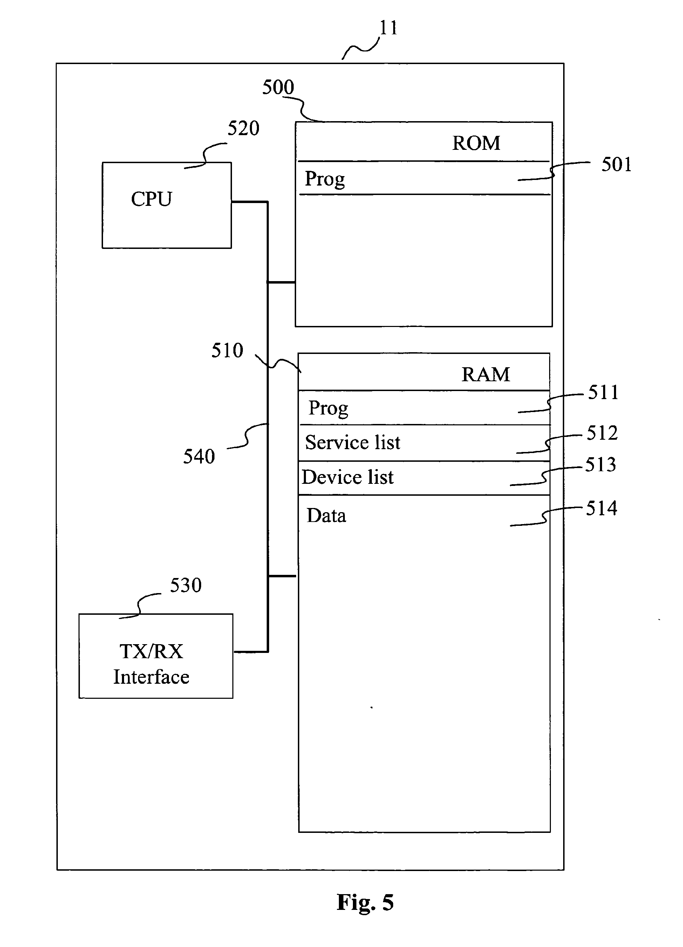

   **Figure 5** shows a device implementing the method of setting up a service rendering according a particular embodiment of the invention. The device 11 comprises the following elements, interconnected by an address and data bus 540:
- a microprocessor 520 (or CPU, for « Central Processing Unit ») ;
- a non-volatile memory of type ROM (« Read Only Memory ») 500 ;
- a read-write memory or RAM (« Random Access Memory ») 510 ; and
- a transmission/reception (TX/RX) interface 530.

At power-on, the microprocessor 520 copies the program corresponding to the instructions of the algorithm implementing the steps of the method of setting up that is stored in the ROM register 501 to RAM register 511 and executes it.

The transmission/reception interface 530 allows the device 11 to receive and send messages and data over a network connection. According to a particular embodiment of device 11, the interface 530 is adapted for connection to a wireless network. According to variant embodiment of device 11, the interface 530 is adapted for connection to a wired network. According to a particular embodiment of the device 11 the transmission and reception interfaces are combined in a same interface 530. According to a variant embodiment of the device 11, the transmission and reception interfaces are separate interfaces that are both separately connected to address- and data bus 540.

The word « register » used in the description of memories 500 and 510 means a low-capacity memory zone (only some binary data) or a high-capacity memory zone (allowing the storage of an entire program or of a large amount of data).

Each of the registers in ROM 500 and RAM 510 can hold a variable number of data of variable size. The read-only memory 500 comprises:
- a register 501, where the program is stored that is copied to RAM register 511 upon startup of the device.

The random-access memory 510 comprises:
- a register 511, used for storing the program copied from ROM register 501 and executed upon startup of the device;
- a register 512, used for storing a service list that can be sent upon reception of a request for such a list;
- a register 513, used for storing a device list of devices that are capable of rendering a selected service, which device list can be sent upon reception of a request for such a list;
- a register 514 that contains a data space needed for the functioning of the program stored in RAM register 511, such as temporary variables.

Other structures than that described by figures 4 and 5 are compatible with the invention. Particularly, according to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

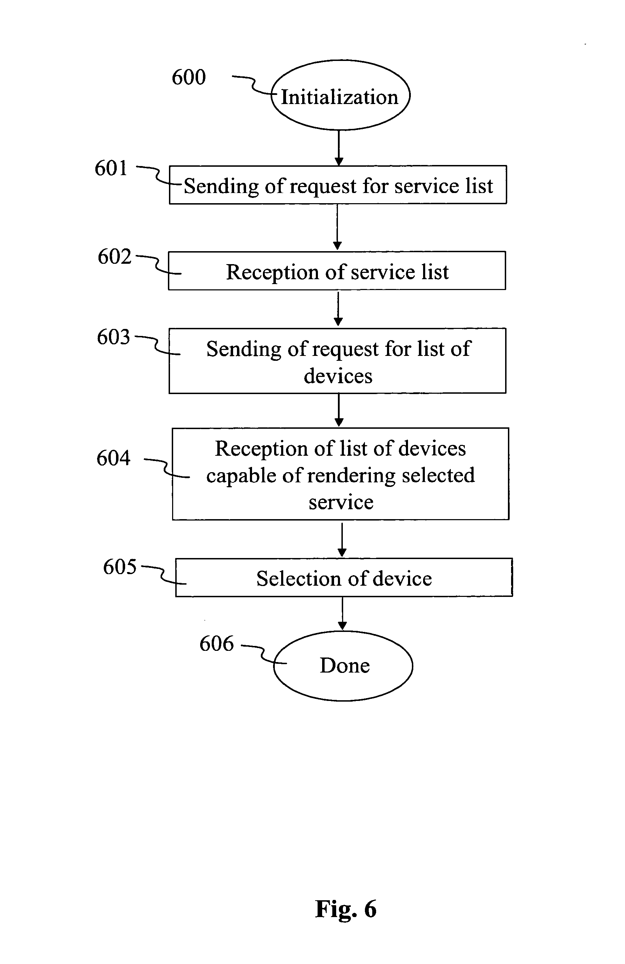

**Figure 6** shows an algorithm of selection of at least one device for rendering a service according to a particular embodiment of the invention. The algorithm can for example be implemented by device User device 14.

The algorithm starts with initialization step 600, where all variables needed for the algorithm are initialized. In step 601, a request for a reception of a list of services sent. In step 602, a list of services comprising at least one service is received; and in step 603, a service is selected from the received list of services, and a second request for reception of a list of devices is sent, which request comprises information representative of the selected service and the request further comprising information representative of at least one determined parameter for construction of the list of devices capable of rendering the service. In step 604, a list of devices capable of rendering the selected service is received, whereby the list of devices is being constructed by taking into account the information representative of the at least one determined parameter for construction of the list of devices and the information representative of the selected service, and the list of devices comprising information representative of at least one service rendering characteristic of at least one device in the list of devices. In step 605, a selection is done of at least one device for rendering the selected service and User device 14 sends a third request for rendering the selected service on the selected at least one device. The algorithm ends with step 606.

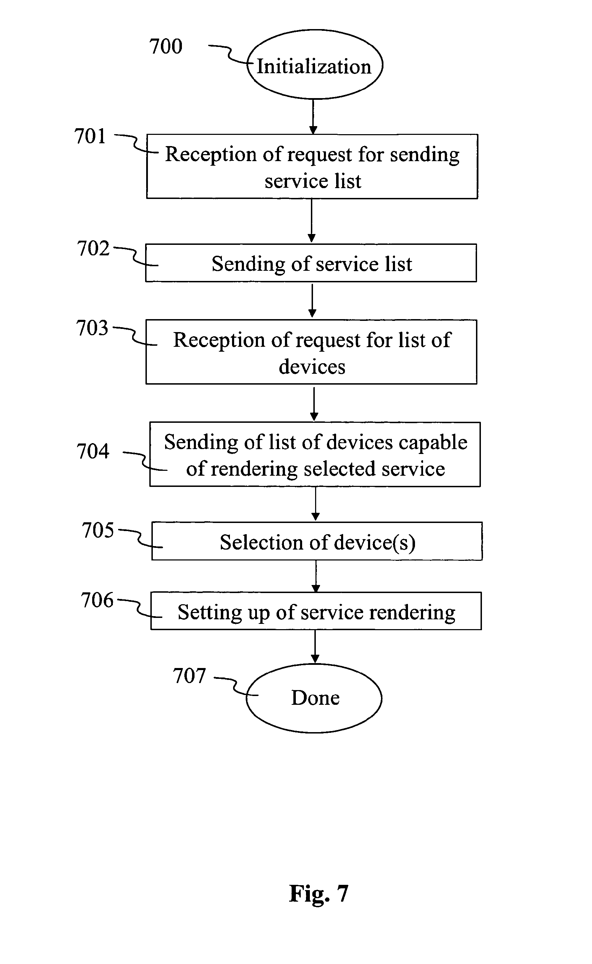

**Figure 7** shows the method of setting up a service rendering on a device for rendering a service according a particular embodiment of the invention. The algorithm can be implemented for example by device 11.

The algorithm starts with initialization step 700, where all variables needed for the algorithm are initialized.

In step 701, a request for a list of services received. In step 702, a list of services is sent, comprising at least one service. In step 703, a second request is received for sending a list of devices capable of rendering a service selected from the sent list of services. This second request comprises information representative of the selected service, as well as information representative of at least one determined parameter for construction of the requested list of devices. In a step 704, the list of devices corresponding to the request is sent. The list of devices being constructed by taking into account the information representative of the determined parameter for construction of the list of devices and the information representative of the selected service. The list of devices lists one or more devices that are capable of rendering the selected service. The list of devices further comprises at least one service rendering characteristic for at least one device in the list. In step 705, a selection is done of at least one device from the sent list of devices by reception (50) of a third request for rendering the selected service on the selected at least one device, the third request comprising information representative of the selected at least one device. In step 706, the rendering of the selected service is set up on the selected device(s).

The algorithm ends with step 707.

Of course, the described embodiments are given as example embodiments of the invention, and thereby the invention is not limited to these embodiments. The example embodiments allow a good understanding of the invention. According to a variant embodiment of the embodiments shown, a network comprises more than one Content Server, more than one Service Rendering device, more than one Multi Control Unit, more than two Video Conferencing devices, more than one user device, more than one Application Servers, and even more than one network, wired or wireless, as well as other devices needed for the functioning of the invention, such as transmitter equipment, traffic and billing management equipment, etc.

For example, in a variant embodiment of the described embodiments, the devices 14 and 11 and even 10 are not connected to the same network, but via interconnected networks. In such a configuration, the invention is particularly advantageous, because it gives a user access to service rendering on devices connected to networks to which he normally would not be able to access, the Application Server 11 doing all the necessary to set up the service rendering.

In yet another embodiment, more than one Application Servers can exist, for example, one or several Application Servers exists per operator network. In such an embodiment, the Application Servers communicate with each other to exchange data and so provide a complete list of available services and a complete list of available devices capable of rendering a service selected from the list of services, to a user device. The list of services and the list of devices can then very well be aggregated to from aggregated list of services provided by all of these networks and aggregated list of devices available on all of these networks and capable of rendering a selected service.

User device 14 is not necessarily a mobile phone as illustrated in figures 1 and 2, but can be any sort of device as shown in figure 4, equipped with a wired or wireless communication interface and compatible with implementation of the method of selection.

The network as illustrated in figures 1 and 2 can have a wireless character, for example through the use of Wi-Fi technology.

An user device such as user device 14 from figures 1 and 2 can be directly connected to an access network, such as an IPTV (Internet Protocol TeleVision) receiver connected to an DSL (Digital Subscriber Line) network, or a mobile telephone connected to a 3GPP (3^{rd} Generation Partnership Project) access network.

According to a particular embodiment of the invention, the invention is advantageously implemented in a network supporting IMS/TISPAN (Internet protocol Multimedia Subsystem/Telecoms and Internet converged Services and Protocols for Advanced Networks). So-called managed network domains, such as operator networks, are more often based on IP (Internet Protocol) technology, and access networks and home networks can use IP as a transport layer. The IMS and TISPAN architecture is emerging in this context as a network architecture that spans from the managed network domain of an operator to the home network domain of a user. User devices can then use IMS information and signaling flows to deliver services to a final destination. IMS defines a set of specifications from 3GPP for delivering IP multimedia to mobile users. TISPAN is a European standardization body and defines the architecture for DSL and Wi-Fi access networks on the basis of existing IMS specifications. See ETSI TISPAN TS 185009, ETSI TISPAN TS189003 "Customer Network Gateway (CNG) architecture and Reference Points" and TS185 006 "Customer Devices Architecture and Reference Points" which specify a functional architecture for IMS based IPTV devices.

The invention can be applied to a network architecture such as proposed by IMS/TISPAN, but is not limited to application in the field of the cited architectures and protocols, but equally concerns other proprietary or standardized architectures and protocols.

## Claims

1. Method of selection of a service and of selection of at least one first device (10) capable of rendering a selected service, said method being implemented by a second device (14) requesting said rendering of said selected service, said at least one first device (10) and said second device (14) being connected to a digital communication network (12), said method comprising the successive steps of
a) sending (300; 601) of a first request for reception of a list of services comprising at least one service,
b) reception (301; 602) of said list of services,
said method being **characterized in that** it further comprises the successive steps of:
c) sending (302; 603) of a second request for reception of a list of first devices (10), said second request comprising information representative of a selected service selected from said list of services, and said second request further comprising information representative of at least one determined parameter for construction of said list of first devices (10);
d) reception (303; 604) of said list of first devices (10), said list of first devices (10) being constructed by taking into account said information representative of said at least one determined parameter for construction and by taking into account said information representative of said selected service, and said list of first devices (10) further comprising information representative of at least one service rendering characteristic for at least one first device (10) in said list of first devices (10); and
e) selection of at least one first device (10) from said list of first devices (10) by sending (304; 605) of a third request for rendering said selected service on said selected at least one first device (10), said third request comprising information representative of said selected at least one first device (10).

2. Method according to claim 1, **characterized in that** said at least one determined parameter for construction of said list of first devices (10) is represented by at least one element of a set of elements comprising:
- a value of a desired geographical proximity parameter between said second device (14) and said at least one first device (10); and
- a value of a desired service rendering characteristic of said at least one first device (10).

3. Method according to any of claims 1 to 2, **characterized in that** said at least one service rendering characteristic is represented by at least one element of a set of elements comprising:
- an information representative of a geographical proximity indicating a geographical distance between said second device (14) and said at least one first device (10);
- a description of a location of said at least one first device (10);
- a device type of said at least one first device (10);
- a service rendering cost for rendering said selected service on said at least one first device (10);
- a service rendering quality indicator for rendering said selected service on said at least one first device (10);
- a technical specification of said at least one first device (10), said technical specification being represented by at least one element of a set of elements comprising
- a maximum attainable screen resolution of said at least one first device (10);
- a screen dimension of said at least one first device (10);
- an audio rendering quality of said at least one first device (10);
- a list of additional equipment of said at least one first device (10).

4. Method according to any of claims 1 to 3, **characterized in that** said construction of said list of first devices (10) is done by taking into account at least one element of a set of elements comprising:
- at least a user preference; and
- at least a previous selection.

5. Method according to any of claims 1 to 4, **characterized in that** said selection of said at least one first device (10) from said list of first devices (10) is done by a user (120).

6. Method according to any of claims 1 to 5, **characterized in that** said selection of said at least one first device (10) from said received list of first devices (10) is done by taking into account at least one element of a set of elements comprising:
- a user preference; and
- a previous selection.

7. Method of setting up a service rendering on at least one first device (10) capable of rendering a selected service, said method being implemented by a second device (11) for setting up a service rendering, said at least one first device (10) and said second device (11) being connected to a digital communication network (12), said method comprising the successive steps of
a) reception (300; 701) of a first request for sending of a list of services comprising at least one service,
b) sending (301; 702) of said list of services,
said method being **characterized in that** it further comprises the successive steps of:
c) reception (302; 703) of a second request for sending of a list of first devices (10), said second request comprising information representative of a selected service selected from said list of services, and said second request further comprising information representative of at least one determined parameter for construction of said list of first devices (10);
d) sending (303; 704) of said list of first devices (10), said list of first devices (10) being constructed by taking into account said information representative of said at least one determined parameter for construction and by taking into account said information representative of said selected service, and said list of first devices (10) further comprising information representative of at least one service rendering characteristic for at least one first device (10) in said list of first devices (10);
e) selection of at least one first device (10) from said list of first devices (10) by reception (304; 705) of a third request for rendering said selected service on said selected at least one first device (10), said third request comprising information representative of said selected at least one first device (10); and
f) setting up (305; 306; 706) of a service rendering of said selected service on said selected at least one first device (10).

8. Method according to claim 7, **characterized in that** said at least one determined parameter for construction of said list of first devices (10) is at least one element of a set of elements comprising:
- a value of a desired geographical proximity between said second device (14) and said at least one first device (10); and
- a value of a desired service rendering characteristic of said at least one first device (10).

9. Method according to claim 7 to 8, **characterized in that** said at least one service rendering characteristic is represented by at least one element of a set of elements comprising:
- an information representative of a geographical proximity indicating a geographical distance between said second device (14) and said at least one first device (10);
- a description of a location of said at least one first device (10);
- a device type of said at least one first device (10);
- a service rendering cost for rendering of said selected service on said at least one first device (10);
- a service rendering quality indicator for rendering of said selected service on at least one first device (10);
- a technical specification of said at least one first device (10), said technical specification being represented by at least one element of a set of elements comprising
- a maximum attainable screen resolution of said at least one first device (10);
- a screen dimension of said at least one first device (10);
- an audio rendering quality of said at least one first device (10);
- a list of additional equipment of said at least one first device (10).

10. Method according to any of claims 7 to 9, **characterized in that** said construction of said list of first devices (10) is done by taking into account at least one element of a set of elements comprising:
- at least one user preference; and
- at least one previous selection.

11. Method according to any of claims 7 to 10, **characterized in that** said selection of said at least one first device (10) is done by a user (120).

12. Method according to any of claims 7 to 10, **characterized in that** said selection of said at least one first device (10) is done by taking into account at least one element of a set of elements comprising:
- at least one user preference; and
- at least one previous selection.

13. Selection device (14) for selection of a service and for selection of at least one service rendering device (10) capable of rendering a selected service, said selection device (14) requesting said rendering of said selected service, said at least one service rendering device (10) and said selection device (14) being connected to a digital communication network (12), said selection device (14) comprising the following means
- a transmitter (430) for sending of a first request for reception of a list of services comprising at least one service,
- a receiver (430) for reception of said list of services,
said selection device (14) being **characterized in that** said it further comprises the following means:
- said transmitter (430) for sending of a second request for reception of a list of service rendering devices (10), said second request comprising information representative of a selected service selected from said list of services, and said second request further comprising information representative of at least one determined parameter for construction of said list of service rendering devices (10);
- said receiver (430) for reception of said list of service rendering devices (10), said list of service rendering devices (10) being constructed by taking into account said information representative of said at least one determined parameter for construction and by taking into account said information representative of said selected service, and said list of service rendering devices (10) further comprising information representative of at least one service rendering characteristic for at least one service rendering device (10) in said list of service rendering devices (10); and
- said transmitter (430) for transmission of a third request for rendering said selected service on said selected at least one service rendering device (10), said third request comprising information representative of said selected at least one service rendering device (10), said selected at least one service rendering device (10) being selected form said list of service rendering devices (10).

14. Application server device (11) for setting up a service rendering on at least one service rendering device (10) capable of rendering a selected service, said at least one service rendering device (10) and said server device (11) being connected to a digital communication network (12), said application server device (11) comprising the following means
- a receiver (530) for reception of a first request for sending of a list of services comprising at least one service,
- a transmitter (530) for sending of said list of services,
said application server device (11) being **characterized in that** it further comprises the following means:
- said receiver (530) for reception of a second request for sending of a list of service rendering devices (10), said second request comprising information representative of a selected service selected from said list of services, and said second request further comprising information representative of at least one determined parameter for construction of said list of service rendering devices (10);
- means (520, 501) for construction of said list of service rendering devices (10), said list of service rendering devices (10) being constructed by taking into account said information representative of said at least one determined parameter for construction and by taking into account said information representative of said selected service, and said list of service rendering devices (10) further comprising information representative of at least one service rendering characteristic for at least one service rendering device (10) in said list of service rendering devices (10);
- said transmitter (530) for sending of said list of service rendering devices (10);
- said receiver (530) for reception of a third request for rendering said selected service on said selected at least one service rendering device (10), said third request comprising information representative of said selected at least one service rendering device (10), and said selected at least one service rendering device (10) being a selection from said list of service rendering devices (10); and
- means (520, 501) for setting up of a service rendering of said selected service on said selected at least one service rendering device (10).

15. System being **characterized in that** it comprising at least one first device (10) capable of rendering a selected service, a second device (14) for selection of a service and for selection of at least one first device (10) and a third device (11) for setting up a service rendering of said selected service on said at least one first device (10), said at least one first device (10) and said second device (14) and said third device being connected to a digital communication network (12), said system comprising the following means:
- a transmitter (430) for sending of a first request for reception of a list of services comprising at least one service;
- a receiver (530) for receiving of said first request;
- a receiver (430) for receiving said list of services;
- said transmitter (530) for sending of said list of services;
- said transmitter (430) for sending of a second request for reception of a list of first devices (10), said second request comprising information representative of a selected service selected from said list of services, and said second request further comprising information representative of at least one determined parameter for construction of said list of first devices (10);
- said receiver (530) for receiving of said second request;
- means (520, 501) for construction of said list of first devices (10), said list of first devices (10) being constructed by taking into account said information representative of said at least one determined parameter for construction and by taking into account said information representative of said selected service, and said list of first devices (10) further comprising information representative of at least one service rendering characteristic for at least one first device (10) in said list of first devices (10);
- said transmitter (530) for sending of said list of first devices (10);
- said receiver (430) for receiving said list of first devices (10);
- said transmitter (430) for transmission of a third request for rendering said selected service on said selected at least one first device (10), said third request comprising information representative of said selected at least one first device (10), said selected at least one first device (10) being selected from said list of first devices (10);
- said receiver (530) for reception of said third request;
- means (520, 501) for setting up of a service rendering of said selected service on said selected at least one first device (10).
